# EUROPEAN PATENT APPLICATION

(11) **EP 4 685 913 A1**
(43) Date of publication of application: **28.01.2026**
(21) Application number: 25162353.4
(22) Date of filing: 07.03.2025
(51) Int. Cl.: H01M 10/0585, H01M 50/176, H01M 50/533, H01M 50/536, H01M 50/54, H01M 50/553, H01M 50/566, H01M 50/567

(54) **SECONDARY BATTERY AND METHOD OF MANUFACTURING THE SAME**

(30) Priority: 23.07.2024 KR 20240097089
(71) Applicant: Samsung SDI Co., Ltd., Yongin-si, Gyeonggi-do 17084 (KR)
(72) Inventor: LEE, EUNKANG, Yongin-Si, Gyeonggi-do 17084 (KR)
(74) Representative: Gulde & Partner

(57) **Abstract**

A secondary battery includes an electrode assembly including an alternately stacked plurality of laminates, the electrode assembly including a first electrode plate, a separator, and a second electrode plate, and an electrode tab group, the electrode tab group including a plurality of electrode tabs of at least one of the first electrode plate or the second electrode plate, a can that accommodates the electrode assembly and has one open end, a cap plate that is coupled to the one open end of the can and has a through-hole therein through which the electrode tab group passes, and a fixture configured to fix the electrode tab group passing through the through-hole to the cap plate.

## Description

### BACKGROUND

### 1. Field

The present disclosure relates to a secondary battery and a method of manufacturing the same.

### 2. Description of Related Art

Unlike primary batteries that are not designed to be (re)charged, secondary (or rechargeable) batteries are batteries that are designed to be discharged and recharged. Low-capacity secondary batteries are used in portable, small electronic devices, such as smart phones, feature phones, notebook computers, digital cameras, and camcorders, while large-capacity secondary batteries are widely used as power sources for driving motors in hybrid vehicles and electric vehicles and for storing power (e.g., home and/or utility scale power storage). A secondary battery generally includes an electrode assembly composed of a positive electrode and a negative electrode, a case accommodating the same, and electrode terminals connected to the electrode assembly.

A lithium ion battery is a type of secondary battery in which lithium ions move from an anode to a cathode during a discharge process. Current lithium-ion batteries need improvement in terms of lifespan and fast charging. In particular, fast charging of the lithium ion battery may be possible by reducing the resistance of the battery. The resistance of the battery may be divided into resistance due to battery components and internal battery resistance related to the movement of lithium ions. Among these, the resistance due to battery components accounts for a large portion of the battery resistance. In addition, the resistance due to battery components may be improved by changing the structure of the battery.

The above information disclosed in this Background section is for enhancement of understanding of the background of the present disclosure, and therefore, it may contain information that does not constitute related (or prior) art.

### SUMMARY

Embodiments include a secondary battery, including an electrode assembly including an alternately stacked plurality of laminates, the electrode assembly including a first electrode plate, a separator, and a second electrode plate, and an electrode tab group, the electrode tab group including a plurality of electrode tabs of at least one of the first electrode plate or the second electrode plate, a can that accommodates the electrode assembly and has one open end, a cap plate that is coupled to the one open end of the can and has a through-hole therein through which the electrode tab group passes, and a fixture configured to fix the electrode tab group passing through the through-hole to the cap plate.

The electrode tab group may form a terminal on an outer surface of the cap plate.

The fixture may include an insertion portion that contacts the cap plate, a tightening portion that closely presses and fixes the electrode tab group, and a terminal portion connected to an outer end of the tightening portion and surrounds at least a portion of the electrode tab group that is exposed to the outside.

The tightening portion may include a raised part and a recessed part configured to apply pressure to a side surface of the electrode tab group and tighten the electrode tab group.

The fixture may include an insulating material and a chemically resistant material.

The secondary battery may further include an insulating plate having an internal through-hole through which the electrode tab group passes, at a position corresponding to the through-hole.

The electrode tab group may include a plurality of electrode tab groups, and the insulating plate may include a plurality of insulating plates, each of the plurality of insulating plates having the internal through-hole, resulting in a plurality of internal through-holes, a number of the plurality of insulating plates being equal to a number of the plurality of electrode tab groups, and the plurality of electrode tab groups that have passed through the plurality of internal through-holes pass through in an electrically coupled state.

Embodiments include a secondary battery, including an electrode assembly including an alternately stacked plurality of laminates, the electrode assembly including a first electrode plate, a separator, and a second electrode plate, a first electrode tab group and a second electrode tab group, each of the first and second electrode tab groups including a plurality of electrode tabs of at least one of the first electrode plate or the second electrode plate, a can that accommodates the electrode assembly, the can having one end open and an open opposite end, a first cap plate coupled to the one open end of the can, the first cap plate having a first through-hole therein through which the first electrode tab group passes, a second cap plate coupled to the open opposite end of the can, the second cap plate having a second through-hole therein through which the second electrode tab group passes, a first fixture configured to fix the first electrode tab group passing through the first through-hole to the first cap plate, and a second fixture configured to fix the second electrode tab group passing through the second through-hole to the second cap plate.

The first electrode tab group may form a first terminal on an outer surface of the first cap plate, and the second electrode tab group may form a second terminal on another outer surface of the second cap plate.

The first fixture may include a first tightening portion that presses and fixes the first electrode tab group, and a first terminal portion connected to an outer end of the first tightening portion and surrounds at least a portion of the first electrode tab group that is exposed to the outside, and the second fixture may include a second tightening portion that presses and fixes the second electrode tab group, and a second terminal portion connected to an outer end of the second tightening portion and surrounds at least a portion of the second electrode tab group that is exposed to the outside.

The first tightening portion may include a first raised part and a first recessed part configured to apply pressure to a side surface of the first electrode tab group and tighten the first electrode group, and the second tightening portion may include a second raised part and a second recessed part configured to apply pressure to a side surface of the second electrode tab group and tighten the second electrode group.

At least one of the first fixture and the second fixture may include an insulating material and a chemically resistant material.

The secondary battery may further include a first insulating plate having a first internal through-hole, through which the first electrode tab group passes, the first insulating plate being at a position corresponding to the first through-hole, and a second insulating plate having a second internal through-hole, through which the second electrode tab group passes, the second insulating plate being at a position corresponding to the second through-hole.

The first electrode tab group may include a plurality of first electrode tab groups, the plurality of first electrode groups each having the first internal through-hole, resulting in a plurality of first internal through-holes, the second electrode tab group includes a plurality of second electrode tab groups, the plurality of second electrode groups each having the second internal through-hole, resulting in a plurality of second internal through-holes, a number of the plurality of first electrode tab groups is equal to a number equal to a number of the plurality of first electrode tab groups, and the plurality of first electrode tab groups that have passed through the plurality of first internal through-holes pass through in an electrically coupled state, and a number of the plurality of second electrode tab groups is equal to a number equal to a number of the plurality of second electrode tab groups, and the plurality of second electrode tab groups that have passed through the plurality of second internal through-holes pass through in an electrically coupled state.

Embodiments include a method of manufacturing a secondary battery, the method including preparing an electrode assembly by alternately stacking a plurality of laminates including a first electrode plate, a separator, and a second electrode plate, forming an electrode tab group by bundling a plurality of electrode tabs of at least one of the first electrode plate and the second electrode plate, passing the electrode tab group through an internal through-hole of an insulating plate, aligning a cap plate to an outer surface of the insulating plate so that a through-hole of a cap plate is at a position corresponding to the internal through-hole, causing the electrode tab group to pass through a fixture coupled to the through-hole of the cap plate, using the fixture to apply pressure to the electrode tab group to fix the electrode tab group to the cap plate, and inserting the electrode assembly and the insulating plate into a can, and coupling the cap plate to an open end of the can.

The method of manufacturing a secondary battery may further include electrically coupling at least a portion of the electrode tab group fixed by the fixture to form a terminal.

The electrically coupling may include melting at least a portion of the electrode tab group fixed by the fixture via welding.

The melting may include melting the electrode tab group so that the terminal fills an entire area inside a terminal portion of the fixture.

The using the fixture to apply pressure may include tightening a side surface of the electrode tab group using a raised part and a recessed part of a tightening portion of the fixture.

The electrode tab group may include a plurality of electrode tab groups, each of the plurality of electrode tab groups having the internal through-hole, resulting in a plurality of internal through-holes, a number of the plurality of internal through-holes may equal a number of electrode tabs of the plurality of electrode tab groups, and the causing may include causing the plurality of electrode tab groups, which pass through the plurality of internal through-holes, to pass through the fixture in an electrically coupled state.

However, aspects and features of the present disclosure are not limited to those described above, and other aspects and features not mentioned will be clearly understood by a person skilled in the art from the detailed description, described below.

### BRIEF DESCRIPTION OF DRAWINGS

The following drawings attached to the present specification illustrate embodiments of the present disclosure, and further describe aspects and features of the present disclosure together with the detailed description of the present disclosure. Thus, the present disclosure should not be construed as being limited to the drawings:
FIG. 1 is a perspective view illustrating a secondary battery according to one embodiment of the present disclosure.
FIG. 2 is a schematic diagram for explaining a method of connecting electrode tabs and terminals according to one embodiment of the present disclosure.
FIG. 3 is a drawing briefly showing the internal configuration of the secondary battery according to one embodiment of the present disclosure.
FIG. 4 is a drawing for schematically explaining a cross-section in which an insulating plate and a cap plate are disposed in A and B of FIG. 3.
FIG. 5 is a drawing briefly showing the internal configuration of the secondary battery according to one embodiment of the present disclosure.
FIG. 6 is a drawing for schematically explaining a cross-section in which the insulating plate and the cap plate are disposed in A and B of FIG. 5.
FIG. 7 is a side view of a fixture according to one embodiment of the present disclosure.
FIG. 8 is a drawing schematically illustrating a cap plate according to one embodiment of the present disclosure.
FIG. 9 is a drawing showing the result of tightening the tightening portion in D of FIG. 8.
FIG. 10 is a drawing illustrating a step of coupling a cap plate to an open end of a can.
FIG. 11 is a perspective view illustrating a secondary battery according to one embodiment of the present disclosure.
FIG. 12 is a drawing briefly showing the internal configuration of the secondary battery according to one embodiment of the present disclosure.
FIG. 13 is a flow chart for explaining a method of manufacturing a secondary battery according to one embodiment of the present disclosure.

### DETAILED DESCRIPTION

Hereinafter, embodiments of the present disclosure will be described, in detail, with reference to the accompanying drawings. The terms or words used in the present specification and claims are not to be limitedly interpreted as general or dictionary meanings and should be interpreted as meanings and concepts that are consistent with the technical idea of the present disclosure on the basis of the principle that an inventor can be his/her own lexicographer to appropriately define concepts of terms to describe his/her invention in the best way.

The embodiments described in this specification and the configurations shown in the drawings are only some of the embodiments of the present disclosure and do not represent all of the technical spirit, aspects, and features of the present disclosure. Accordingly, it should be understood that there may be various equivalents and modifications that can replace or modify the embodiments described herein at the time of filing this application.

It will be understood that when an element or layer is referred to as being "on," "connected to," or "coupled to" another element or layer, it may be directly on, connected, or coupled to the other element or layer or one or more intervening elements or layers may also be present. When an element or layer is referred to as being "directly on," "directly connected to," or "directly coupled to" another element or layer, there are no intervening elements or layers present. For example, when a first element is described as being "coupled" or "connected" to a second element, the first element may be directly coupled or connected to the second element or the first element may be indirectly coupled or connected to the second element via one or more intervening elements.

In the figures, dimensions of the various elements, layers, etc. may be exaggerated for clarity of illustration. The same reference numerals designate the same elements. As used herein, the term "and/or" includes any and all combinations of one or more of the associated listed items. Further, the use of "may" when describing embodiments of the present disclosure relates to "one or more embodiments of the present disclosure." Expressions, such as "at least one of" and "any one of," when preceding a list of elements, modify the entire list of elements and do not modify the individual elements of the list. When phrases such as "at least one of A, B and C, "at least one of A, B or C," "at least one selected from a group of A, B and C," or "at least one selected from among A, B and C" are used to designate a list of elements A, B and C, the phrase may refer to any and all suitable combinations or a subset of A, B and C, such as A, B, C, A and B, A and C, B and C, or A and B and C. As used herein, the terms "use," "using," and "used" may be considered synonymous with the terms "utilize," "utilizing," and "utilized," respectively. As used herein, the terms "substantially," "about," and similar terms are used as terms of approximation and not as terms of degree, and are intended to account for the inherent variations in measured or calculated values that would be recognized by those of ordinary skill in the art.

It will be understood that, although the terms first, second, third, etc. may be used herein to describe various elements, components, regions, layers, and/or sections, these elements, components, regions, layers, and/or sections should not be limited by these terms. These terms are used to distinguish one element, component, region, layer, or section from another element, component, region, layer, or section. Thus, a first element, component, region, layer, or section discussed below could be termed a second element, component, region, layer, or section without departing from the teachings of example embodiments.

Spatially relative terms, such as "beneath," "below," "lower," "above," "upper," and the like, may be used herein for ease of description to describe one element or feature's relationship to another element(s) or feature(s) as illustrated in the figures. It will be understood that the spatially relative terms are intended to encompass different orientations of the device in use or operation in addition to the orientation depicted in the figures. For example, if the device in the figures is turned over, elements described as "below" or "beneath" other elements or features would then be oriented "above" or "over" the other elements or features. Thus, the term "below" may encompass both an orientation of above and below. The device may be otherwise oriented (rotated 90 degrees or at other orientations), and the spatially relative descriptors used herein should be interpreted accordingly.

The terminology used herein is for the purpose of describing embodiments of the present disclosure and is not intended to be limiting of the present disclosure. As used herein, the singular forms "a" and "an" are intended to include the plural forms as well, unless the context clearly indicates otherwise. It will be further understood that the terms "includes," "including," "comprises," and/or "comprising," when used in this specification, specify the presence of stated features, integers, steps, operations, elements, and/or components but do not preclude the presence or addition of one or more other features, integers, steps, operations, elements, components, and/or groups thereof.

Also, any numerical range disclosed and/or recited herein is intended to include all sub-ranges of the same numerical precision subsumed within the recited range. For example, a range of "1.0 to 10.0" is intended to include all subranges between (and including) the recited minimum value of 1.0 and the recited maximum value of 10.0, that is, having a minimum value equal to or greater than 1.0 and a maximum value equal to or less than 10.0, such as, for example, 2.4 to 7.6. Any maximum numerical limitation recited herein is intended to include all lower numerical limitations subsumed therein, and any minimum numerical limitation recited in this specification is intended to include all higher numerical limitations subsumed therein. Accordingly, Applicant reserves the right to amend this specification, including the claims, to expressly recite any sub-range subsumed within the ranges expressly recited herein. All such ranges are intended to be inherently described in this specification such that amending to expressly recite any such subranges would comply with the related requirements.

References to two compared elements, features, etc. as being "the same" may mean that they are "substantially the same". Thus, the phrase "substantially the same" may include a case having a deviation that is considered low in the art, for example, a deviation of 5% or less. In addition, when a certain parameter is referred to as being uniform in a given region, it may mean that it is uniform in terms of an average.

Throughout the specification, unless otherwise stated, each element may be singular or plural.

Arranging an arbitrary element "above (or below)" or "on (under)" another element may mean that the arbitrary element may be disposed in contact with the upper (or lower) surface of the element, and another element may also be interposed between the element and the arbitrary element disposed on (or under) the element.

In addition, it will be understood that when a component is referred to as being "linked," "coupled," or "connected" to another component, the elements may be directly "coupled," "linked" or "connected" to each other, or another component may be "interposed" between the components".

Throughout the specification, when "A and/or B" is stated, it means A, B or A and B, unless otherwise stated. That is, "and/or" includes any or all combinations of a plurality of items enumerated. When "C to D" is stated, it means C or more and D or less, unless otherwise specified.

The terms used in this specification are for describing embodiments of the present disclosure and are not intended to limit the present disclosure.

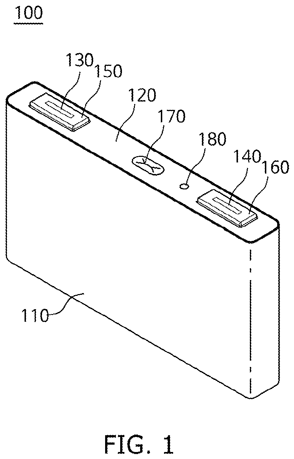

FIG. 1 is a perspective view illustrating a secondary battery according to one embodiment of the present disclosure.

In this disclosure, a secondary battery 100 is explained using a rectangular secondary battery as an example for convenience of explanation, but the secondary battery 100 may be any type of battery that may have a plate-shaped terminal such as a coin-type battery or a cylindrical battery.

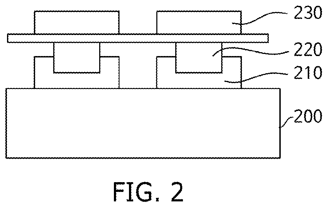

According to one embodiment, the secondary battery 100 may include a can 110, an electrode assembly accommodated in the can 110, a first terminal 130, a second terminal 140, and a cap assembly. The cap assembly may include a cap plate 120, an insulating plate, a first terminal 130, a second terminal 140, a first fixture 150, a second fixture 160, a vent part 170, and an electrolyte injection port 180. In the cap assembly, the structure and connection relationship of the cap plate 120, the insulating plate, the first and second terminals 130, 140, and the first and second fixtures 150, 160 will be described later with reference to FIGS. 2 to 10.

In one embodiment, the first terminal 130, the second terminal 140, the first fixture 150, the second fixture 160, the vent part 170, and the electrolyte injection port 180 are formed on the cap plate 120. The vent part 170 is formed on one side of the cap plate 120. The vent part 170 is formed thinner than other parts so that when the internal pressure of the secondary battery 100 increases due to overcharging, or the like, the vent part 170 is preferentially ruptured compared to other parts to release internal gas and ensure the safety of the battery. In one embodiment, the electrolyte injection port 180 is formed on one side of the cap plate 120, and the electrolyte is injected into the can 110 so that the electrode assembly accommodated therein may be impregnated with the electrolyte.

In one embodiment, the electrode assembly may be formed by alternately stacking a plurality of laminates including a first electrode plate, a separator, and a second electrode plate. In the present disclosure, the electrode plate may not necessarily be in the form of a plate, and is not limited thereto. An electrode assembly may be formed by winding or stacking a stack of a first electrode plate, a separator, and a second electrode plate, which are formed as thin plates or films. When the electrode assembly is a wound stack, a winding axis may be parallel to the longitudinal direction of the case. In other embodiments, the electrode assembly may be a stack type rather than a winding type, and the shape of the electrode assembly is not limited in the present disclosure. In addition, the electrode assembly may be a Z-stack electrode assembly in which a positive electrode plate and a negative electrode plate are inserted into both sides of a separator, which is then bent into a Z-stack. In addition, one or more electrode assemblies may be stacked such that long sides of the electrode assemblies are adjacent to each other and accommodated in the case, and the number of electrode assemblies in the case is not limited in the present disclosure. The first electrode plate of the electrode assembly may act as a negative electrode, and the second electrode plate may act as a positive electrode. Of course, the reverse is also possible.

The first electrode plate may be formed by applying a first electrode active material, such as graphite or carbon, to a first electrode current collector formed of a metal foil, such as copper, a copper alloy, nickel, or a nickel alloy. The first electrode plate may include a first electrode tab (e.g., a first uncoated portion) that is a region to which the first electrode active material is not applied. The first electrode tab may act as a current flow path between the first electrode plate and the first current collector. In some embodiments, when the first electrode plate is manufactured, the first electrode tab may be formed by being cut in advance to protrude to one side of the electrode assembly, or the first electrode tab may protrude to one side of the electrode assembly more than (e.g., farther than or beyond) the separator without being separately cut.

The second electrode plate may be formed by applying a second electrode active material, such as a transition metal oxide, on a second electrode current collector formed of a metal foil, such as aluminum or an aluminum alloy. The second electrode plate may include a second electrode tab (e.g., a second uncoated portion) that is a region to which the second electrode active material is not applied. The second electrode tab may act as a current flow path between the second electrode plate and the second current collector. In some embodiments, the second electrode tab may be formed by being cut in advance to protrude to the other side (e.g., the opposite side) of the electrode assembly when the second electrode plate is manufactured, or the second electrode plate may protrude to the other side of the electrode assembly more than (e.g., farther than or beyond) the separator without being separately cut.

In some embodiments, the first electrode tab may be located on the left side of the electrode assembly, and the second electrode tab may be located on the right side of the electrode assembly. In other embodiments, the first electrode tab and the second electrode tab may be located on one side of the electrode assembly in the same direction. Here, for convenience of description, the left and right sides are defined according to the secondary battery 100 as oriented in FIG. 1, and the positions thereof may change when the secondary battery 100 is rotated left and right or up and down.

In the secondary battery 100 according to one embodiment, an electrode assembly is accommodated inside the can 110 with one end open. In the secondary battery 100, the can 110 may be a metal container having an approximately rectangular parallelepiped shape. For example, the can may be formed by a processing method such as deep drawing. The cap plate 120 according to one embodiment is coupled to the open end of the can 110 to seal the inside of the can 110.

In one embodiment, for example, when the electrode assembly is a stack type, the electrode assembly may be in a form in which a plurality of first electrode tabs extend or protrude from a plurality of stacked first electrode plates. A first electrode tab group in which a plurality of first electrode tabs are stacked passes through a first through-hole formed in the cap plate 120 and is fixed by the first fixture 150. In the same manner, a second electrode tab group, in which a plurality of second electrode tabs that extend or protrude from the second electrode plate are stacked, passes through the second through-hole formed in the cap plate 120 and is fixed by the second fixture 160.

In one embodiment, on the outer surface of the cap plate 120, the first electrode tab group forms a first electrode terminal, and the second electrode tab group forms a second electrode terminal. A method of forming the electrode terminal by the electrode tab group will be described later.

In the present disclosure, the first terminal 130 may be a negative terminal, and the second terminal 140 may be a positive terminal. In addition, the first electrode plate may be a negative plate, and the second electrode plate may be a positive plate. In addition, the first electrode tab may be a negative tab, and the second electrode tab may be a positive tab.

FIG. 2 is a schematic diagram for explaining a method of connecting electrode tabs and terminals according to one embodiment of the present disclosure.

In the secondary battery according to one embodiment, an electrode tab 210 formed integrally with an electrode plate 200 of the electrode assembly or coupled to an uncoated portion of the electrode plate 200 on which an active material is not coated may be connected to a current collector 220 through an electrode terminal 230. The electrode terminal 230 may refer to a component that is exposed to the outside of the secondary battery and provides electrical connection between the electrode assembly accommodated inside and an external electronic device. Specifically, the first electrode tab may be a passage for current flow between the first electrode plate and a first current collector. The second electrode tab may be a passage for current flow between the second electrode plate and a second current collector.

The first current collector and the second current collector may be welded and connected to the first electrode tab of the first electrode plate and the second electrode tab of the second electrode plate, respectively. For convenience of process in the assembly process of the secondary battery, the electrode tab 210 and the electrode terminal 230 may be indirectly connected through the current collector 220. However, because current is applied through the current collector 220, the length of the wire through which the current flows may increase. Due to this, the resistance of the secondary battery is formed to be greater than the actual resistance of the electrode plate 200.

The electrode tab 210 in FIG. 2 means a single electrode tab or an electrode tab group formed by combining a plurality of electrode tabs. When the electrode tab group formed by combining a plurality of electrode tabs is welded and connected to the current collector 220, the plurality of electrode tabs 210 are gathered in one direction and welded, and then the corresponding electrode tab group is welded to the current collector 220. In this case, the component resistance of the battery significantly increases due to indirect welding through the current collector 220. In an embodiment, a plurality of electrode tab groups formed by gathering the plurality of electrode tabs 210 in one direction and the current collector 220 may be welded together. In this case, a slight gap may occur between the electrode tabs 210. The gap between the electrode tabs 210 may increase the component resistance of the battery. Thus, in embodiments where the current collector 220 is not present and current is directly applied to the electrode tabs 210, the resistance of the secondary battery may be reduced compared to the case where the gap is present.

Here, the current collector 220 may refer to all components that may be a passage for collecting the flow of current in the secondary battery, but is not limited to the structure illustrated in FIG. 2. For example, the current collector 220 may be a sub-plate, a current collector plate, or the like. The current collector 220 connects the electrode tabs 210 and the electrode terminals 230 inside the can, but the assembly location of the current collector may be changed in various ways.

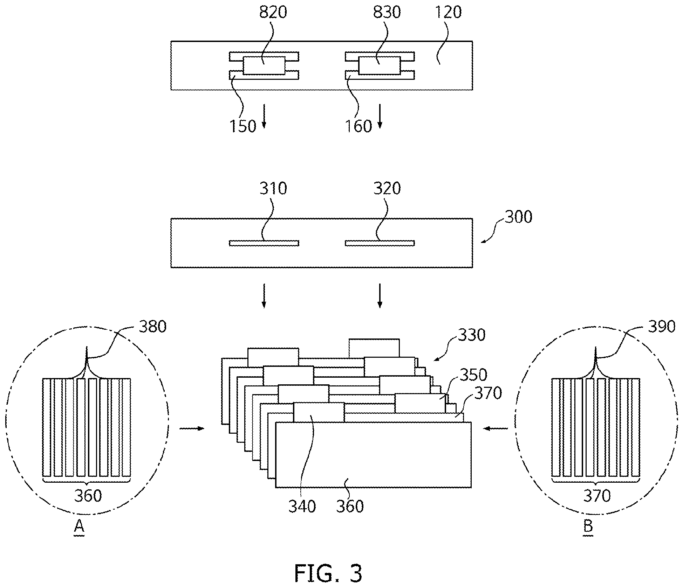

FIG. 3 is a drawing briefly showing the internal configuration of the secondary battery according to one embodiment of the present disclosure. FIG. 3 schematically shows an electrode assembly 330, an insulating plate 300, a cap plate 120, and fixtures 150, 160 coupled to the cap plate 120. In FIG. 3, a separator is interposed between the first electrode plate 360 and the second electrode plate 370, but is omitted for the convenience of explanation of the electrode tab group. The number of electrode plates shown in FIG. 3 is smaller than the actual number for the convenience of explanation. The cross-sections of the cap plate 120 and the insulating plate 300 are shown as viewed from the top.

According to one embodiment, the electrode assembly 330 may be formed by alternately stacking a plurality of laminates including the first electrode plate 360, a separator, and the second electrode plate 370. The electrode assembly 330 may include an electrode tab group formed by combining a plurality of electrode tabs of at least one of the first electrode plate 360 and the second electrode plate 370. For example, as shown in FIG. 3, a plurality of first electrode tabs 340 respectively connected to a plurality of first electrode plates 360 may be combined to form a first electrode tab group 380. In addition, a plurality of second electrode tabs 350 respectively connected to a plurality of second electrode plates 370 may be combined to form a second electrode tab group 390.

As illustrated in FIG. 3, the electrode assembly 330 is described using a stack type structure as an example, but the electrode assembly may also be a roll-up type. When the electrode assembly 330 is a roll-up type (e.g., resembling a jelly roll), the electrode assembly may be formed by winding a laminate including a first electrode plate 360, a separator, and a second electrode plate 370. In this case, a first electrode tab 340 may be connected to each first electrode plate 360 of each winding layer. Alternatively, a second electrode tab 350 may be connected to each second electrode plate 370 of each winding layer. In one embodiment, in such a configuration, a plurality of first electrode tabs 340 may be combined to form a first electrode tab group 380. Alternatively or additionally, a plurality of second electrode tabs 350 may be combined to form a second electrode tab group 390. In addition to the above-described cases, various types of electrode assemblies in which a plurality of electrode tabs are combined to form a plurality of electrode tab groups may be included in the secondary battery.

In the present disclosure, the sizes of the first electrode plate 360 and the second electrode plate 370 of the electrode assembly 330 are illustrated as being the same, but is not limited. In another example, the first electrode plate 360 may be larger than the second electrode plate 370. For example, when the first electrode plate 360 is a negative plate and the second electrode plate 370 is a positive plate, the negative plate may be larger than the positive plate, so that lithium metal dendrites may not be generated on the negative plate.

At least one through-hole through which the electrode tab group passes may be formed in the cap plate 120 according to one embodiment. Specifically, a first through-hole 820 through which the first electrode tab group 380 passes may be formed in the cap plate 120. Alternatively or additionally, a second through-hole 830 through which the second electrode tab group 390 passes may be formed in the cap plate 120. In the assembled secondary battery, the position at which the through-hole is formed on the cap plate 120 may correspond to (e.g., align with) the position of the electrode tab group formed on one side of the electrode assembly 330. For example, the position of the first through-hole 820 formed in the cap plate 120 may correspond to the position of the first electrode tab group 380 of the electrode assembly 330. Alternatively or additionally, the position of the second through-hole 830 formed on the cap plate 120 may correspond to the position of the second electrode tab group 390 of the electrode assembly 330. In the cap plate 120 according to one embodiment, a first through-hole 820 and a second through-hole 830 may be formed to correspond to the positions of the first electrode tab group 380 and the second electrode tab group 390 of the electrode assembly 330 accommodated inside a can (for example, can 110 of FIG. 1), respectively. The cap plate 120 may be coupled to an open end of the can such that the electrode tab group and the through-hole of the electrode assembly correspond as above.

According to one embodiment, a fixture may be coupled to a through-hole in the cap plate 120. Specifically, the fixture may be configured such that electrode tab groups passing through the through-hole are fixed to the cap plate 120. For example, the first fixture 150 may be configured such that the first electrode tab group 380 passing through the first through-hole 820 is fixed to the cap plate 120. The second fixture 160 may be configured such that the second electrode tab group 390 passing through the second through-hole 830 is fixed to the cap plate 120. The size of the through-hole may be such that the electrode tab group as described above can pass through the through-hole. The size of the electrode tab group may vary depending on the number of stacked electrode plates of the electrode assembly.

Referring to FIG. 3, the fixture 150 or 160 may be formed such that only a portion thereof is exposed on the upper surface of the cap plate 120, and the other portion thereof is formed across the bottom of the cap plate 120 or the through-hole 820 or 830 of the cap plate 120. In one embodiment, the fixture 150 or 160 may be a structure configured to tighten an object (for example, a group of electrode tabs) inserted through the fixture 150 or 160 in the width direction of the cap plate 120. In this case, as illustrated in FIG. 3, because the fixture 150 or 160 is not tightened before the electrode tab group 380 or 390 passes through the through-hole 820 or 830, the two sides of the fixture 150 or 160 may appear to be spaced apart from each other.

In one embodiment, as shown in the left side view (A) of the first electrode plate 360, only the first electrode tabs 340 connected to the first electrode plate 360 are gathered approximately near the center in the width direction of the cap plate 120 (e.g., a vertical direction as oriented in FIG. 3) to form the first electrode tab group 380. Accordingly, a first through-hole 820 through which the first electrode tab group 380 may pass may be formed approximately near the center in the width direction of the cap plate 120. The specific location and structure of the first fixture 150 within the first through-hole will be described later.

In one embodiment, as shown in the right side view (B) of the second electrode plate 370, only the second electrode tabs 350 connected to the second electrode plates 370 are gathered approximately near the center in the width direction of the cap plate 120 to form a second electrode tab group 390. Accordingly, a second through-hole 830 through which the second electrode tab group 390 may pass may be formed approximately near the center in the width direction of the cap plate 120.

A secondary battery according to one embodiment may further include an insulating plate having an internal through-hole formed therein through which the above-described electrode tab group passes, at a position corresponding to the through-hole of the cap plate 120. The insulating plate 300 is placed, for example, on the bottom of the cap plate 120 that is coupled to an open end of the can 110, and is fixedly coupled to the bottom of the cap plate 120 or the can 110.

For example, in the insulating plate 300, a first internal through-hole 310 may be formed at a position corresponding to the first through-hole 820 through which the first electrode tab group 380 passes. The first electrode tab group 380 of the electrode assembly 330 first passes through the first internal through-hole 310 of the insulating plate 300 and then passes through the first through-hole 820 of the cap plate 120 to be exposed to the outside. For example, all of the first electrode tabs 340 may be exposed to the outside.

Alternatively or additionally, in the insulating plate 300, a second internal through-hole 320 may be formed at a position corresponding to the second through-hole 830 through which the second electrode tab group 390 passes. The second electrode tab group 390 of the electrode assembly 330 first passes through the second internal through-hole 320 of the insulating plate 300 and then passes through the second through-hole 830 of the cap plate 120 to be exposed to the outside. For example, all of the second electrode tabs 350 may be exposed to the outside.

In one embodiment, as illustrated in FIG. 3, the first electrode tab group 380 and the second electrode tab group 390 may be positioned together at one end of the electrode assembly 330. Accordingly, the cap plate 120 and the insulating plate 300 may be located on one side of the secondary battery. Additionally, the first through-hole 820 and the second through-hole may be formed in one cap plate 120. The first internal through-hole and the second internal through-hole may be formed in one insulating plate 300.

In one embodiment, referring to FIG. 3, the through-hole or internal through-hole may have a width that is slightly larger than the thickness in the direction in which the electrode tabs are stacked in the electrode tab group. In addition, the through-hole may be wider than the internal through-hole. Here, the width may mean the length of a short portion.

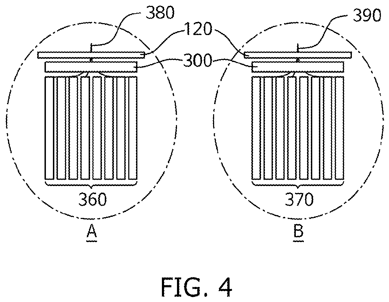

FIG. 4 is a drawing for schematically explaining a cross-section in which an insulating plate and a cap plate are disposed in A and B of FIG. 3.

Referring to FIG. 4, an insulating plate 300 may be disposed at the bottom of the cap plate 120, and in one embodiment, the first electrode tab group 380 passes through the first internal through-hole of the insulating plate 300 and then passes through the first through-hole of the cap plate 120 to be exposed to the outside. The externally exposed one end of the first electrode tab group 380 may be transformed into a first terminal (for example, 130 of FIG. 1). This will be described later. In one embodiment, the second electrode tab group 390 passes through the second internal through-hole of the insulating plate 300 and then passes through the second through-hole of the cap plate 120 to be exposed to the outside. The externally exposed one end of the second electrode tab group may be transformed into a second terminal (for example, 140 of FIG. 1).

In one embodiment, as illustrated in FIG. 4, in order to form one electrode tab group 380 or 390, the length of the electrode tab may be sufficiently long, or the number of electrode plates 360 or 370 to be stacked may be appropriate to prevent the electrode tab at the end from not being connected to a terminal. When the first electrode tab groups 380 or 390 of a relatively small number, for example, one is formed, uniform current may be easily applied to all electrode plates 360 or 370. When the number of first electrode tab groups 380 or 390 is relatively large, the problem may be solved by increasing the length of the electrode tabs. For example, the length of the electrode tab may be adjusted by adjusting the width of the uncoated portion, which is the area in which the electrode active material is not coated during electrode manufacturing.

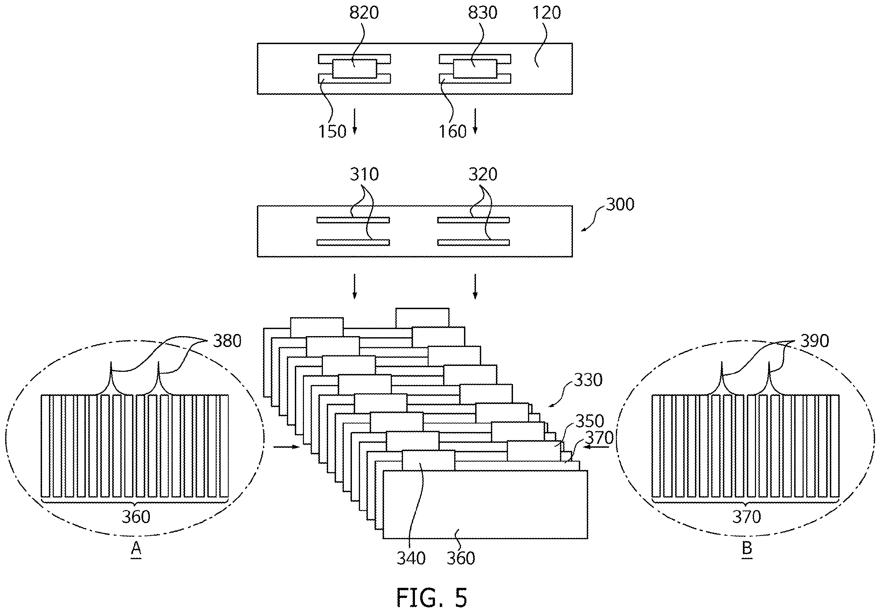

FIG. 5 is a drawing briefly showing the internal configuration of the secondary battery according to one embodiment of the present disclosure. FIG. 5 schematically shows an electrode assembly 330, an insulating plate 300, a cap plate 120, and fixtures 150, 160 coupled to the cap plate 120. In FIG. 5, a separator is interposed between the first electrode plate 360 and the second electrode plate 370, but is omitted for the convenience of explanation of the electrode tab group. The number of electrode plates shown in FIG. 5 is shown as a smaller number than the actual number for the convenience of explanation. 16 electrode plates 360 or 370 are shown, unlike 8 electrode plates shown in FIGS. 3 and 4, but this is to explain that the number of electrode tab groups 380 or 390 may be designed differently when the number of electrode plates 360 or 370 is large. The cross-sections of the cap plate 120 and the insulating plate 300 are shown as viewed from the top. Details that overlap with the previously-described embodiments are omitted.

In the secondary battery according to one embodiment, the number of electrode tab groups 380 or 390 is plural, and the internal through-holes 310 or 320 in the insulating plate 300 may be formed in the same number as the number of electrode tab groups 380 or 390 formed in the electrode assembly 330. For example, the number of electrode tab groups may be 2, as shown in FIG. 5. When there is a plurality of electrode tab groups 380 or 390, the electrode tab groups may pass through the internal through-holes of the insulating plate, respectively 300.

The number of electrode plates may vary depending on the type of secondary battery. When the number of electrode plates is excessive, and thus the number of electrode tabs 340 or 350 is excessive, as described above, dividing and grounding for each predetermined number of electrode tabs may be effective in reducing component resistance of the secondary battery. In addition, when the number of electrode tab groups 380 or 390 is plural, the number of electrode tabs at the ends that are not connected to the terminals may be reduced, which may not increase the component resistance.

In addition, a plurality of electrode tab groups that have passed through a plurality of internal through-holes in the insulating plate 300 pass through the through-hole in the cap plate 120 in an electrically coupled state. Here, the electrical coupling may be achieved by welding. The welding may be ultrasonic welding or laser welding. Laser welding may have higher welding strength than ultrasonic welding.

In one embodiment, as shown in FIG. 5, two electrode tab groups 380 respectively passing through two first internal through-holes 310 formed in the insulating plate 300 may pass through the first through-hole 820 in the cap plate 120 in an electrically coupled state. In this way, one first terminal (for example, 130 in FIG. 1) may be formed on the cap plate 120. Alternatively or additionally, two electrode tab groups 390 respectively passing through two second internal through-holes 320 formed in the insulating plate 300 may pass through the second through-hole 830 in the cap plate 120 in an electrically coupled state. In this way, a second terminal (for example, 140 in FIG. 1) may be formed on the cap plate 120.

In one embodiment, as shown in the left side view (A) of the first electrode plate 360, the first electrode tabs 340 connected to approximately half of the first electrode plates 360 are gathered to form two first electrode tab groups 380. Accordingly, two first internal through-holes 310 are formed, through which two first electrode tab groups 380 may pass, respectively, in the width direction of the insulating plate 300.

In one embodiment, as shown in the right side view (B) of the second electrode plate 370, the second electrode tabs 350 connected to approximately half of the second electrode plates 370 are gathered to form two second electrode tab groups 390. Accordingly, two second internal through-holes 320 are formed, through which two second electrode tab groups 390 may pass, respectively, in the width direction of the insulating plate 300.

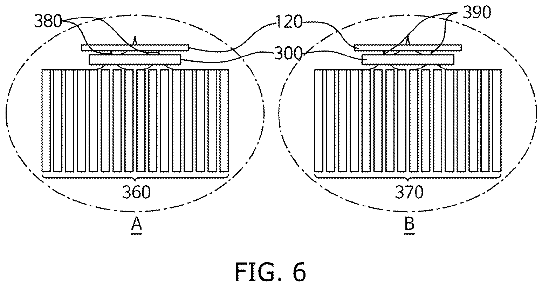

FIG. 6 is a drawing for schematically explaining a cross-section in which the insulating plate and the cap plate are disposed in A and B of FIG. 5. 16 electrode plates are shown in FIG. 6, unlike 8 electrode plates are shown in FIG. 4. Details that overlap with the above-described embodiments are omitted.

Referring to FIG. 6, an insulating plate 300 may be disposed at the bottom of the cap plate 120, and in one embodiment, the two first electrode tab groups 380 pass through the two first internal through-holes of the insulating plate 300 respectively, and then pass through the first through-hole of the cap plate 120 to be exposed to the outside. The externally exposed one end of the first electrode tab group 380 may be transformed into a first terminal (for example, 130 of FIG. 1). This will be described later. In one embodiment, the second electrode tab group 390 pass through two second internal through-holes of the insulating plate 300 and then pass through the second through-hole of the cap plate 120 to be exposed to the outside. The externally exposed one end of the second electrode tab group may be transformed into a second terminal (for example, 140 of FIG. 1).

In the present disclosure, unlike as shown in FIGS. 3 and 4, when the number of electrode plates is large (e.g., relatively large) as shown in FIGS. 5 and 6, in addition to the method of increasing the number of electrode tab groups, it is of course possible to reduce the number of electrode tab groups, for example, to 1, by increasing the length of the electrode tabs by adjusting the width of the uncoated portion. However, when the number of electrode tab groups is 1, the number of internal through-holes of the insulating plate may be 1 to correspond to the number of electrode tab groups.

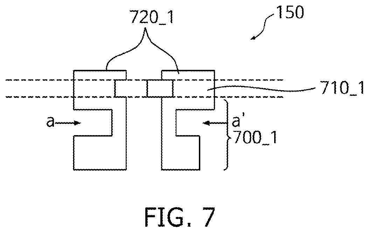

FIG. 7 is a side view of a fixture according to one embodiment of the present disclosure. In FIG. 7, the first fixture 150 is described as an example. The following description may also be applied to the second fixture 160.

The first fixture 150 according to one embodiment may include a first insertion portion 700_1 that contacts the cap plate, a first tightening portion 710_1 that closely presses and fixes the electrode tab group as described above, and a first terminal portion 720_1 that is connected to an outer end of the first tightening portion 710_1 and surrounds at least a portion of the electrode tab group that is exposed to the outside of the secondary battery.

The first fixture 150 according to one embodiment may include an insulating material and a chemically resistant material. The first fixture 150 may include an insulating material so as to be insulated in an area of the cap plate other than the first terminal. In addition, the first fixture 150 may include a chemically resistant material so that it does not react with an electrolyte, or the like contained inside the can. For example, the first fixture 150 may include a polyimide (PI) or polyethylene terephthalate (PET) material.

When the first fixture 150 according to one embodiment is configured to compress and gather a group of electrode tabs with two or more insulating, chemically resistant structures interposed therebetween, the method of compressing and gathering is not limited thereto. For example, the first fixture 150 may be a structure that compresses and gathers electrode tab groups disposed between raised and recessed surfaces. Alternatively, the first fixture 150 may be a structure that is fastened by pressing and gathering a group of electrode tabs interposed between bolts and nuts formed on the first fixture 150. Hereinafter, the first fixture 150 that gathers electrode tab groups in the raised and recessed surfaces will be described as an example.

The first insertion portion 700_1 according to one embodiment may be a portion into which a cap plate (for example, 120 of FIG. 3) is inserted. Referring to FIG. 7, the cap plate may be inserted in the a and a' directions. In the fixture 150, the cap plate may be assembled to the portion indented in the a and a' directions.

The first tightening portion 710_1 according to one embodiment may be a structure disposed between the first insertion portion 700_1 and the first terminal portion 720_1. A first electrode tab group may pass between the two structures of the first tightening portion 710_1 and may be seamlessly connected to the first insertion portion 700_1. Referring to FIG. 7, the outermost surface of the first tightening portion 710_1 may be a structure that protrudes outwardly from the outermost surface of the first insertion portion 700_1. Therefore, the through-space initially occupied by the first fixture 150 disposed on the cap plate becomes an empty space due to the process of gathering the two structures in the first tightening portion 710_1, thereby preventing a part of the cap plate from being opened. For example, referring to FIG. 7, even if the structure on the right side where the relief is formed moves to the left, the empty space in the area occupied by the first inserting portion 700_1 may be covered by the first tightening portion 710_1 or the first terminal portion 720_1.

In one embodiment, the first tightening portion 710_1 may be placed on the upper surface of the cap plate and exposed to the outside of the secondary battery. In addition, the thickness of the inner space where the electrode tab group is disposed in the first tightening portion 710_1 after tightening may vary depending on the number of laminated electrode plates of the electrode assembly and the thickness of each electrode plate. The thickness may vary depending on the electrode assembly. The terminal portion 720_1 according to one embodiment may be disposed on the upper surface of the cap plate and exposed to the outside of the secondary battery. When viewed from the upper surface of the secondary battery after the tightening process of the electrode tab group, as shown in FIG. 1, a structure in the shape of right-angled C may be connected.

In the present disclosure, the first terminal portion 720_1, the first tightening portion 710_1, and the first insertion portion 700_1 are separately described, but this is for the convenience of description, and the first terminal portion 720_1, the first tightening portion 710_1, and the first insertion portion 700_1 may be configured as an integral body without a seam.

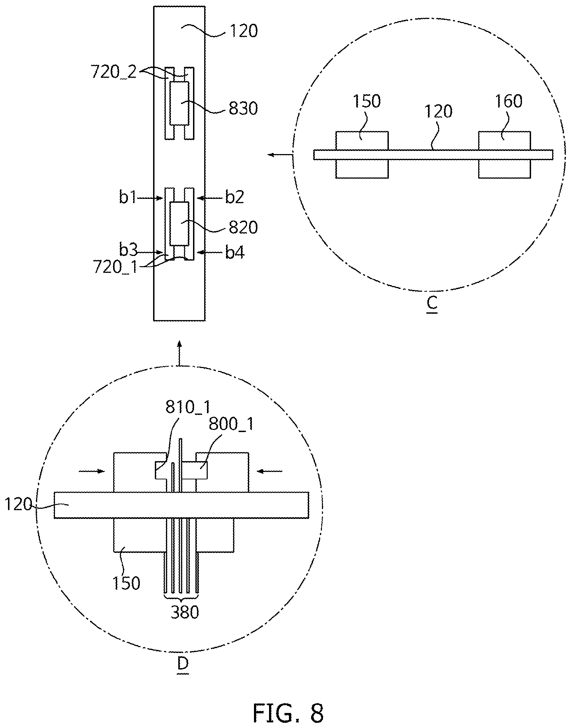

FIG. 8 is a drawing schematically illustrating a cap plate according to one embodiment of the present disclosure. Hereinafter, descriptions of overlapping components of the cap plate described above will be omitted.

The front view D of the cap plate and the side view C of the cap plate show the fixtures 150, 160 described with reference to FIG. 7 coupled to the cap plate 120. Here, the first electrode tab group 380 may be pressed and tightened between a first raised part 800_1 and a first recessed part 810_1 of the tightening portion.

Referring to the side view C of the cap plate, the fixtures 150, 160 may be an integral part. Referring to the top view of the cap plate, for example, the first fixture 150 may receive a horizontal force at points b1, b2, b3, b4 to press the first electrode tab group 380.

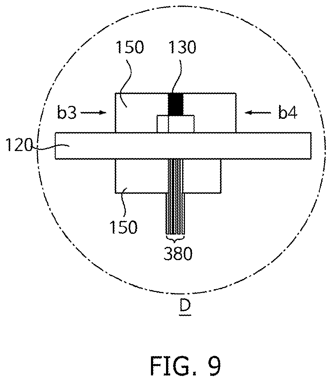

FIG. 9 is a drawing showing the result of tightening the tightening portion in D of FIG. 8.

The first tightening portion (for example, 710_1 of FIG. 7) according to one embodiment may include a raised part and a recessed part configured to apply pressure to tighten the side surface of the first electrode tab group 380. Referring to FIG. 9, a horizontal force may be applied at points b3 and b4 to press (e.g., push together) the electrode tabs of the first electrode tab group 380. The first fixture 150 may have a structure in which the raised part and the recessed part are combined to form a right-angled C shape when viewed from the top surface of the cap plate 120. The first electrode tab group 380 exposed to the outside may be melted by welding to fill the first terminal portion (for example, 720_1 of FIG. 7) having a structure in which the right-angled C shapes described above are connected. The melted first electrode tab group 380 may be the first terminal 130. The degree to which the tightening portion 710_1 is tightened may be adjusted according to the size of the first electrode tab group 380 and the size of the first terminal 130 when melted.

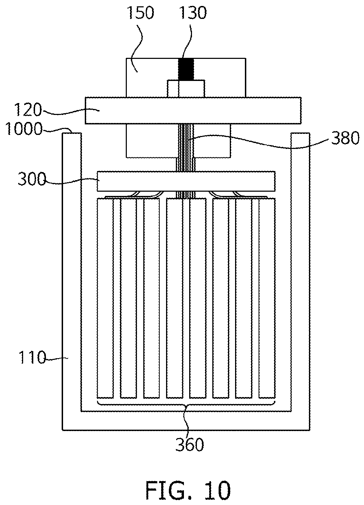

FIG. 10 is a drawing illustrating a step of coupling a cap plate to an open end of a can.

The cap plate 120 connected to the first fixture 150 described with reference to FIG. 9, the insulating plate 300, and the electrode assembly may be inserted into the can 110 so that the ends of the cap plate 120 may be joined to the one end of the can 110.

As illustrated, a portion of electrode tab groups 380 formed by gathering electrode tabs that are formed by being drawn out from one side of a first electrode plate 360 of an electrode assembly pass through an internal through-hole of an insulating plate 300, then pass through a through-hole formed in a cap plate 120, and may be fixed by a fixture 150. In addition, the first electrode tab group 380 exposed to the outside may be melted by welding and formed into a first terminal 130. In a state where the electrode assembly assembled in this manner is accommodated in the can 110, the end of the cap plate 120 may be joined to one end of the can 110 through a joining method such as welding.

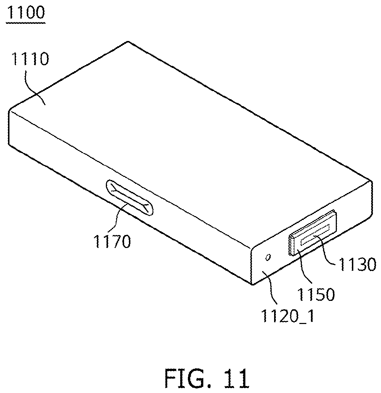

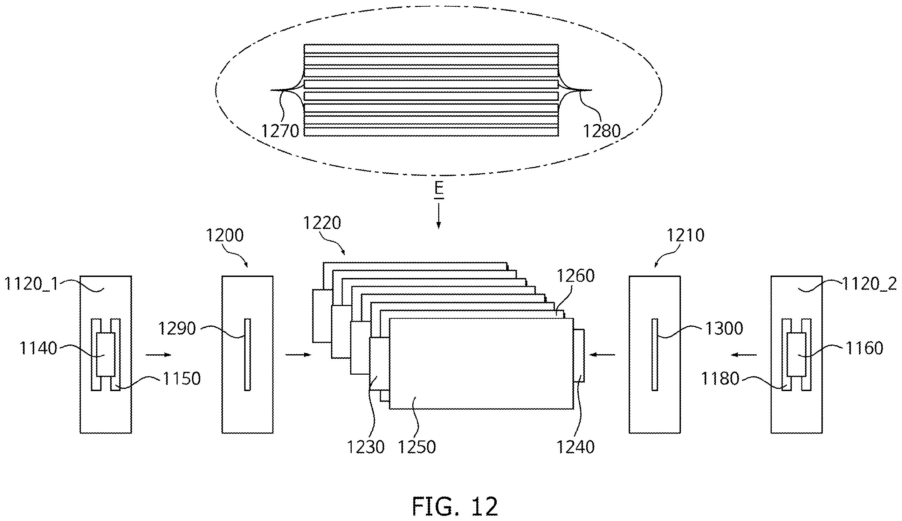

FIG. 11 is a perspective view illustrating a secondary battery according to one embodiment of the present disclosure. FIG. 12 is a drawing briefly showing the internal configuration of the secondary battery according to one embodiment of the present disclosure. FIG. 12 shows an electrode assembly 1220, insulating plates 1200 and 1210, a cap plate 1120, and fixtures 1150 and 1180 coupled to the cap plate 1120. In FIG. 12, a separator is interposed between the first electrode plate 1250 and the second electrode plate 1260, but is omitted for the convenience of explanation of the electrode tab group. The number of electrode plates shown in FIG. 12 is shown as a smaller number than the actual number for the convenience of explanation. The cross-sections of the cap plate 1120 and the insulating plates 1200 and 1210 are shown as viewed from the top. The following will focus on differences from the previously-described embodiments.

The electrode assembly 1220 according to one embodiment may be formed by alternately stacking a plurality of laminates including the first electrode plate 1250, a separator, and the second electrode plate 1260. In addition, the electrode assembly 1220 may include a plurality of first electrode tabs 1230 of the first electrode plates 1250 and a plurality of second electrode tabs 1240 of the second electrode plates 1260.

In a can (FIG. 11, 1110) that accommodates an electrode assembly 1220 and of which one end and the other end opposite to the one end are open, a first cap plate 1120_1 may be coupled to the open end of the can 1110 and have a first through-hole 1140 through which a first electrode tab group 1270 passes.

A second cap plate 1120_2 may be coupled to the open other end of the can 1110 and have a second through-hole 1160 through which a second electrode tab group 1280 passes.

The first fixture 1150 may be configured such that the first electrode tab group 1270 passing through the first through-hole 1160 is fixed to the first cap plate 1120_1. The second fixture 1180 may be configured such that the second electrode tab group 1280 passing through the second through-hole 1160 is fixed to the second cap plate 1120_2.

The first insulating plate 1200 according to an embodiment may be formed with a first internal through-hole 1290 configured at a position corresponding to the first through-hole 1140 through which the first electrode tab group 1270 passes. The second insulating plate 1210 may be formed with a second internal through-hole 1300 configured at a position corresponding to the second through-hole 1160 through which the second electrode tab group 1280 passes.

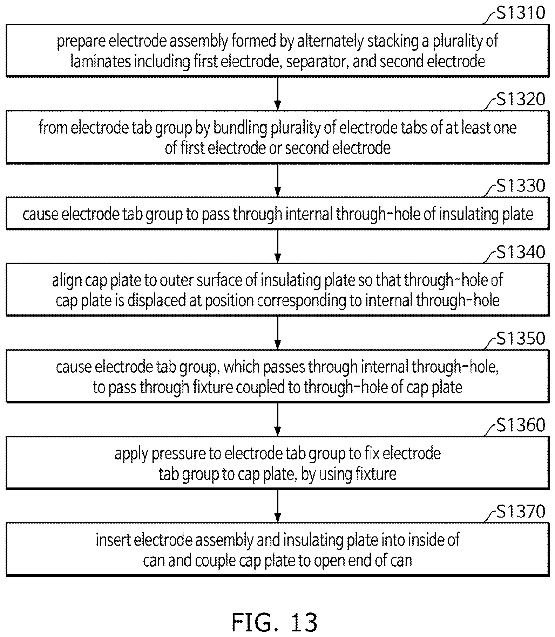

FIG. 13 is a flow chart for explaining a method of manufacturing a secondary battery according to an embodiment of the present disclosure. Details that overlap with the previously-described embodiments are omitted.

The method of manufacturing a secondary battery according to an embodiment of the present disclosure may be initiated by a step (S1310) of preparing an electrode assembly formed by alternately stacking a plurality of laminates including a first electrode plate, a separator, and a second electrode plate.

Then, an electrode tab group may be formed by bundling a plurality of electrode tabs of at least one of the first electrode plate and the second electrode plate (S1320).

According to one embodiment, the electrode assembly may be a stack type formed by alternately stacking a plurality of laminates including a first electrode plate, a separator, and a second electrode plate. The electrode assembly may include an electrode tab group formed by combining a plurality of electrode tabs of at least one of the first electrode plate or the second electrode plate. In another embodiment, the electrode assembly may be a winding type. When the electrode assembly is a roll-up type, the electrode assembly may be formed by winding a laminate including a first electrode plate, a separator, and a second electrode plate. In this case, a first electrode tab may be connected to each first electrode plate of each winding layer. As another example, a second electrode tab may be connected to each second electrode plate of each winding layer. In such a configuration, a plurality of first electrode tabs are combined to form a first electrode tab group, and/or a plurality of second electrode tabs are combined to form a second electrode tab group.

In addition, the electrode tab group may be passed through an internal through-hole of the insulating plate (S1330).

Then, the cap plate may be aligned to an outer surface of the insulating plate so that the through-hole of the cap plate is disposed at a position corresponding to (e.g., aligned with) the internal through-hole (S1340).

In one embodiment, at least one through-hole through which the electrode tab group passes may be formed in the cap plate. Specifically, a first through-hole through which a first electrode tab group passes may be formed in the cap plate. Alternatively or additionally, a second through-hole through which a second electrode tab group passes may be formed in the cap plate.

In one embodiment, an insulating plate having an internal through-hole formed therein through which the above-described electrode tab group passes, may be formed at a position corresponding to the through-hole of the cap plate. For example, in the insulating plate, a first internal through-hole may be formed at a position corresponding to the first through-hole through which the first electrode tab group passes. The first electrode tab group of the electrode assembly first passes through the first internal through-hole of the insulating plate and then passes through the first through-hole of the cap plate to be exposed to the outside. Alternatively, in the insulating plate, a second internal through-hole may be formed at a position corresponding to the second through-hole through which the second electrode tab group passes. The second electrode tab group of the electrode assembly first passes through the second internal through-hole of the insulating plate and then passes through the second through-hole of the cap plate to be exposed to the outside.

The electrode tab group passing through the internal through-hole may be caused to pass through a fixture coupled to the through-hole of the cap plate (S1350).

Then, using the fixture, pressure may be applied to the electrode tab group to fix the electrode tab group to the cap plate (S1360).

In one embodiment, the step (S1360) of applying pressure to the electrode tab group to fix the electrode tab group to the cap plate, by using the fixture described above may include a step of tightening a side surface of the electrode tab group by using a raised part and a recessed part of a tightening portion of the fixture.

In one embodiment, the step of electrically coupling at least a portion of the electrode tab group fixed by the fixture to form a terminal may include a step of melting at least a portion of the electrode tab group fixed by the fixture through welding.

In one embodiment, the step of melting at least a portion of the electrode tab group fixed by the fixture through welding may include a step of melting the electrode tab group so that the terminal fills the entire area inside the terminal portion of the fixture.

Then, the electrode assembly and the insulating plate may be inserted into the inside of the can, and the cap plate may be coupled to the open end of the can (S1370).

The flowchart of FIG. 13 and the description above are only examples of the present disclosure, and the scope of the present disclosure is not limited to the flowchart of FIG. 13 and the description above. For example, one or more steps in the flowchart and the description above may be added/changed/deleted, the order of one or more steps may be changed, and one or more steps may be performed simultaneously.

The problem to be solved by the present invention is to provide a secondary battery and a method of manufacturing the same for solving the noted problems.

However, the technical problem to be solved by the present disclosure is not limited to the above problem, and other problems not mentioned herein, and aspects and features of the present disclosure that would address such problems, will be clearly understood by those skilled in the art from the description of the present disclosure below.

Although the present disclosure has been described above with respect to embodiments thereof, the present disclosure is not limited thereto. Various modifications and variations can be made thereto by those skilled in the art within the spirit of the present disclosure and the equivalent scope of the appended claims.

Description of some reference symbols:
110, 1110: Can
120: Cap plate
130, 1130: First terminal
140: Second terminal
150, 1150: First fixture
160, 1180: Second fixture
170, 1170: Vent part
180: Electrolyte injection port

## Claims

1. A secondary battery (100), comprising:
an electrode assembly (330, 1220) including an alternately stacked plurality of laminates, the electrode assembly (330, 1220) including a first electrode plate (360, 1250), a separator, and a second electrode plate (370, 1260), and an electrode tab (210) group (380, 390), the electrode tab (210) group (380, 390) including a plurality of electrode tabs (340, 350) of at least one of the first electrode plate (360, 1250) or the second electrode plate (370, 1260);
a can (110, 1110) that accommodates the electrode assembly (330, 1220) and has one open end;
a cap plate (120, 1120) that is coupled to the one open end of the can (110, 1110) and has a through-hole (820, 830) therein through which the electrode tab group (380, 390) passes; and
a fixture (150, 160) configured to fix the electrode tab group (380, 390) passing through the through-hole (820, 830) to the cap plate (120, 1120).

2. The secondary battery (100) as claimed in claim 1, wherein the electrode tab group (380, 390) forms a terminal (130, 140) on an outer surface of the cap plate (120, 1120).

3. The secondary battery (100) as claimed in claim 1 or 2, wherein the fixture (150) includes an insertion portion (700_1) that contacts the cap plate (120, 1120), a tightening portion (710_1) that closely presses and fixes the electrode tab group (380), and a terminal portion (720_1) connected to an outer end of the tightening portion (710_1) and surrounds at least a portion of the electrode tab group (380) that is exposed to the outside.

4. The secondary battery (100) as claimed in claim 3, wherein the tightening portion (710_1) includes a raised part (800_1) and a recessed part (810_1) configured to apply pressure to a side surface of the electrode tab group (380) and tighten the electrode tab group (380).

5. The secondary battery (100) as claimed in claims 1 to 4, wherein the fixture (150, 160) includes an insulating material and a chemically resistant material.

6. The secondary battery (100) as claimed in claims 1 to 5, further comprising an insulating plate (300, 1200, 1210) having an internal through-hole (310, 320) through which the electrode tab group (380, 390) passes, at a position corresponding to the through-hole (820, 830).

7. The secondary battery (100) as claimed in claim 6, wherein:
the electrode tab group (380, 390) includes a plurality of electrode tab groups, and the internal through-hole (310, 320) includes a plurality of internal through-holes, each of the plurality of electrode tab groups (380, 390) passing through each of the plurality of internal through-holes (310, 320), a number of the plurality of internal through-holes (310, 320) being equal to a number of the plurality of electrode tab groups (380, 390), and
the plurality of electrode tab groups (380, 390) that have passed through the plurality of internal through-holes (310, 320) pass through the through-hole (820, 830) in an electrically coupled state.

8. A secondary battery (100, 1100), comprising:
an electrode assembly (330, 1220) including an alternately stacked plurality of laminates, the electrode assembly (330, 1220) including a first electrode plate (360, 1250), a separator, and a second electrode plate (370, 1260), a first electrode tab group (380, 1270) and a second electrode tab group (390, 1280), each of the first and second electrode tab groups (390, 1280) including a plurality of electrode tabs (1230, 1240) of at least one of the first electrode plate (360, 1250) or the second electrode plate (370, 1260);
a can (110, 1110) that accommodates the electrode assembly (330, 1220), the can (110, 1110) having one end open and an open opposite end;
a first cap plate (1120_1) coupled to the one open end of the can (110, 1110), the first cap plate (1120_1) having a first through-hole (820, 1140) therein through which the first electrode tab group (380, 1270) passes;
a second cap plate (1120_2) coupled to the open opposite end of the can (110, 1110), the second cap plate (1120_2) having a second through-hole (830, 1160) therein through which the second electrode tab group (390, 1280) passes;
a first fixture (150, 1150) configured to fix the first electrode tab group (380, 1270) passing through the first through-hole (820, 1140) to the first cap plate (1120_1); and
a second fixture (150, 160, 1180) configured to fix the second electrode tab group (390, 1280) passing through the second through-hole (830, 1160) to the second cap plate (1120_2).

9. The secondary battery (100, 1100) as claimed in claim 8, wherein:
the first electrode tab group (380, 1270) (1270) forms a first terminal (130) (1130) on an outer surface of the first cap plate (1120_1) (1120_1), and
the second electrode tab group (390, 1280) (1280) forms a second terminal (140) on another outer surface of the second cap plate (1120_2).

10. The secondary battery (100, 1100) as claimed in claim 8 or 9, wherein:
the first fixture (150, 1150) includes:
a first tightening portion (710_1) that presses and fixes the first electrode tab group (380, 1270), and
a first terminal portion (720_1) connected to an outer end of the first tightening portion (710_1) and surrounds at least a portion (700_1) of the first electrode tab group (380, 1270) that is exposed to the outside, and
the second fixture (150, 160, 1180) includes:
a second tightening portion (700_1) that presses and fixes the second electrode tab group (390, 1280), and
a second terminal (140) portion (700_1) connected to an outer end of the second tightening portion (700_1) and surrounds at least a portion (700_1) of the second electrode tab group (390, 1280) that is exposed to the outside and/or wherein:
the first tightening portion (710_1) includes a first raised part (800_1) and a first recessed part (810_1) configured to apply pressure to a side surface of the first electrode tab group (380, 1270) and tighten the first electrode group (1270), and
the second tightening portion (700_1) includes a second raised part and a second recessed part configured to apply pressure to a side surface of the second electrode tab group (390, 1280) and tighten the second electrode group (1280).

11. The secondary battery (100, 1100) as claimed in claims 1 to 10, wherein the cap plate (120, 1120) includes a vent part (170), wherein the vent part (170) is ruptured compared to other parts to release internal gas and ensure the safety of the battery.

12. The secondary battery (100, 1100) as claimed in claims 8 to 11, wherein at least one of the first fixture (150, 1150) and the second fixture (150, 160, 1180) includes an insulating material and a chemically resistant material.

13. The secondary battery (100, 1100) as claimed in claims 8 to 12, further comprising:
a first insulating plate (1200) having a first internal through-hole (310, 1290), through which the first electrode tab group (380, 1270) passes, the first internal through-hole (310, 1290) being at a position corresponding to the first through-hole (820, 1140); and
a second insulating plate (1210) having a second internal through-hole (320, 1300), through which the second electrode tab group (390, 1280) passes, the second internal through-hole (320, 1300) being at a position corresponding to the second through-hole (830, 1160).

14. The secondary battery (100, 1100) as claimed in claim 13, wherein:
the first electrode tab group (380, 1270) includes a plurality of first electrode tab groups (380, 1270), and the first internal through-hole (310, 1290) includes a plurality of first internal through-holes (310, 1290), each of the plurality of first electrode tab groups (380, 1270) passing through each of the plurality of first internal through-holes (310, 1290),
the second electrode tab group (390, 1280) includes a plurality of second electrode tab groups (390, 1280), and the second internal through-hole (320, 1300) includes a plurality of second internal through-holes (320, 1300), each of the plurality of second electrode tab groups (390, 1280) passing through each of the plurality of second internal through-holes (320, 1300),
a number of the plurality of first electrode tab groups (380, 1270) is equal to a number equal to a number of the plurality of first internal through-holes (310, 1290), and the plurality of first electrode tab groups (380, 1270) that have passed through the plurality of first internal through-holes (310, 1290) pass through the first through-hole (820, 1140) in an electrically coupled state, and
a number of the plurality of second electrode tab groups (390, 1280) is equal to a number equal to a number of the plurality of second internal through-holes (320, 1300), and the plurality of second electrode tab groups (390, 1280) that have passed through the plurality of second internal through-holes (320, 1300) pass through the second through-holes (830, 1160) in an electrically coupled state.

15. A method of manufacturing a secondary battery (100), the method comprising:
preparing an electrode assembly (330, 1220) by alternately stacking a plurality of laminates including a first electrode plate (360, 1250), a separator, and a second electrode plate (370, 1260);
forming an electrode tab group (380, 390) by bundling a plurality of electrode tabs (340, 350) of at least one of the first electrode plate (360, 1250) and the second electrode plate (370, 1260);
passing the electrode tab group (380, 390) through an internal through-hole (310, 320) of an insulating plate (300, 1200, 1210);
aligning a cap plate (120, 1120) to an outer surface of the insulating plate (300, 1200, 1210) so that a through-hole (820, 830) of a cap plate (120, 1120) is at a position corresponding to the internal through-hole (310, 320);
causing the electrode tab group (380, 390) to pass through a fixture (150, 160) coupled to the through-hole (820, 830) of the cap plate (120, 1120);
using the fixture (150, 160) to apply pressure to the electrode tab group (380, 390) to fix the electrode tab group (380, 390) to the cap plate (120, 1120); and
inserting the electrode assembly (330, 1220) and the insulating plate (300, 1200, 1210) into a can (110, 1110), and coupling the cap plate (120, 1120) to an open end of the can (110, 1110).
